# EUROPEAN PATENT APPLICATION

(11) **EP 4 765 704 A1**
(43) Date of publication of application: **24.06.2026**
(21) Application number: 24864517.8
(22) Date of filing: 04.09.2024
(51) Int. Cl.: H04L 1/1829, H04L 1/1607, H04L 1/1867

(54) **DATA RETRANSMISSION METHOD, APPARATUS, AND SYSTEM**

(30) Priority: 13.09.2023 CN 202311187754
(71) Applicant: HUAWEI TECHNOLOGIES CO., LTD., Shenzhen 518129 (CN)
(72) Inventor: LIU, Yongzhi, Shenzhen, Guangdong 518129 (CN); ZHANG, Baili, Shenzhen, Guangdong 518129 (CN); QIU, Xianwen, Shenzhen, Guangdong 518129 (CN)
(74) Representative: Grünecker Patent- und Rechtsanwälte PartG mbB
(86) International application number: PCT/CN2024/116881
(87) International publication number: WO 2025/055797

(57) **Abstract**

Embodiments of this application provide a data retransmission method, an apparatus, and a system. In embodiments of this application, retransmission is performed at a physical layer based on data slices. The data slice includes code blocks contained by at least one FEC codeword, and a corresponding serial number is allocated to each of the data slices in data. A sending device stores, when sending the data, the sent data slices and corresponding serial numbers in a buffer. After receiving the data, a receiving device also allocates a corresponding serial number to each of the data slices in a manner the same as that of the sending device. Then, the receiving device sends, after finding an uncorrectable error, a retransmission request that carries a serial number corresponding to a data slice, and the sending device extracts the corresponding data slice from the buffer based on the retransmission request to start retransmission. It may be learned that the data slice contains a small quantity of the code blocks, and compared with packet-based retransmission, the data slice-based retransmission is more conducive to reducing a transmission delay of the retransmission and reducing buffer space.

## Description

This application claims priority to Chinese Patent Application No. 202311187754.8, filed with the China National Intellectual Property Administration on September 13, 2023 and entitled "DATA RETRANSMISSION METHOD, APPARATUS, AND SYSTEM", which is incorporated herein by reference in its entirety.

### TECHNICAL FIELD

Embodiments of this application relate to the field of communication, and in particular, to a data retransmission method, an apparatus, and a system.

### BACKGROUND

When devices are interconnected, there is a high probability of bit errors during transmission due to channel interference. As a transmission bandwidth and rate increase, the probability of bit errors becomes higher. Although the devices have been equipped with the forward error correction (Forward Error Correction, FEC) technology, not all bit errors can be corrected, for example, a packet error or loss occasionally occurs on a receiving device.

To ensure lossless link transmission during device interconnection, there is a need for the capability to notify a sending device to perform retransmission when the packet error or loss occurs on the receiving device, so that the receiving device can correctly receive all packets sent by the sending device. Currently, in the Ethernet protocol, retransmission is performed at a granularity of packets, and a retransmission-related message can be sent only at a packet boundary. As a maximum length of the packet is 9,600 bytes, if the sending device sends a larger packet, the retransmission-related message has a higher delay, and the sending device has to use much larger buffer space to store the retransmission packet.

### SUMMARY

Embodiments of this application provide a data retransmission method, an apparatus, and a system, to reduce a transmission delay of a retransmission request and reduce buffer space.

According to a first aspect, an embodiment of this application provides a data retransmission method, and the data retransmission method is applied to a first apparatus on a data receiving side. Specifically, the first apparatus receives data sent by a second apparatus, where the data may be divided into data slices, the data slice includes code blocks contained by at least one forward error correction (forward error correction, FEC) codeword, and each of the data slices corresponds to one serial number. Then, the first apparatus checks the data received, and if an uncorrectable error occurs in the data, the first apparatus sends a data retransmission request to the second apparatus. The data retransmission request includes a target serial number, to request the second apparatus to send retransmission data to the first apparatus based on the target serial number.

In this implementation, retransmission is performed at a physical layer based on the data slices. The data slice includes the code blocks contained by the at least one FEC codeword, and the data slice contains a small quantity of the code blocks. Compared with packet-based retransmission, data slice-based retransmission is more conducive to reducing a transmission delay of the retransmission and reducing buffer space. In addition, the data retransmission method provided in embodiments of this application is implemented at the physical layer, where the physical layer is closer to a physical port of data transmission, and is more conducive to reducing the transmission delay compared with a method for implementing retransmission at a data link layer.

In some possible implementations, an alignment marker (alignment marker, AM) is periodically inserted into the data, and a periodicity for inserting the AM may also be referred to as an AM window. Each of AM windows includes N data slices, and a data slice located at a starting location of each of the AM windows includes an AM, where N is an integer greater than or equal to 1. In other words, the data slice-based retransmission enables the periodicity of the AM to remain stable.

In some possible implementations, the method further includes: The first apparatus identifies the AM in the data, and allocates corresponding serial numbers to the data slices, starting from the data slice that includes the AM, in the AM window. In the AM window, the serial numbers corresponding to the data slices starting from the data slice that includes the AM are in ascending order. It may be learned that the first apparatus identifies the AM in the data to slice the data in the AM window, so that serial numbers allocated by the first apparatus and the second apparatus to the data slices are consistent. In this way, the second apparatus does not need to send the serial number corresponding to each of the data slices to the first apparatus, further simplifying an implementation.

In some possible implementations, each of the data slices has a same length, so that standard unification of the data slices can be implemented.

In some possible implementations, a quantity of code blocks in the data retransmission request is an integer multiple of a quantity of the code blocks in the data slice, that is, the retransmission request is sent by using the data slice as a granularity, so that the first apparatus does not need to split the data slice when sending the data, thereby ensuring atomicity of the data slice.

In some possible implementations, the retransmission data includes a target data slice corresponding to a target sequence and a data slice following the target data slice, thereby ensuring integrity of the retransmission data.

In some possible implementations, if the uncorrectable error occurs in the data, the method further includes: The first apparatus discards the target data slice corresponding to the target serial number and the data slice following the target data slice, to prepare for receiving the retransmission data.

In some possible implementations, after the first apparatus sends the data retransmission request to the second apparatus, the method further includes: The first apparatus receives a data retransmission acknowledgment sent by the second apparatus, where the data retransmission acknowledgment indicates that the retransmission data starts to be sent. Further, the first apparatus starts to receive the retransmission data sent by the second apparatus. In other words, after sending the retransmission request and receiving the retransmission acknowledgment, the first apparatus starts to receive the retransmission data, thereby further improving a data retransmission procedure.

In some possible implementations, a quantity of code blocks in the data retransmission acknowledgment is an integer multiple of the quantity of the code blocks in the data slice, that is, the retransmission acknowledgment is sent by using the data slice as a granularity, so that the second apparatus does not need to split the data slice when sending the data, thereby ensuring the atomicity of the data slice.

In some possible implementations, after the first apparatus receives the data retransmission acknowledgment, the method further includes: The first apparatus determines whether a quantity of code blocks checked to be correct in the data retransmission acknowledgment is greater than a threshold. If the quantity of code blocks checked to be correct in the data retransmission acknowledgment is greater than the threshold, the first apparatus confirms that the data retransmission acknowledgment received by the first apparatus is correct. It can be learned that, for the data retransmission acknowledgment, even if some uncorrectable errors are found at this moment, the data retransmission acknowledgment needs to be identified, thereby increasing a possibility of identifying the data retransmission acknowledgment.

In some possible implementations, that the first apparatus sends the data retransmission request to the second apparatus if the uncorrectable error occurs in the data includes: If the uncorrectable error occurs in the data, the first apparatus sends the data retransmission request to the second apparatus at a moment at which a next data slice is to be sent. In other words, the data slices and the data retransmission request are continuously sent, which helps ensure that the periodicity of the AM is stable.

In some possible implementations, a size of the code block is 66 bits or 257 bits, that is, retransmission scheduling is implemented based on 64b/66b encoding or 256b/257b encoding, thereby improving practicability of this solution.

In some possible implementations, the data slice includes 80 code blocks whose size is 66 bits or 20 code blocks whose size is 257 bits, that is, the data slice includes code blocks that can be contained by one FEC codeword.

According to a second aspect, an embodiment of this application provides a data retransmission method, and the data retransmission method is applied to a first apparatus on a data transmitting side. Specifically, the first apparatus obtains data, where the data includes data slices, the data slice includes code blocks contained by at least one FEC codeword, and each of the data slices corresponds to one serial number. When sending the data to a second apparatus, the first apparatus stores each of the data slices and the corresponding serial number into a buffer. Then, the first apparatus receives a data retransmission request including a target serial number, and sends retransmission data to the second apparatus based on the target serial number.

In this implementation, retransmission is performed at a physical layer based on the data slices. The data slice includes the code blocks contained by the at least one FEC codeword, and the data slice contains a small quantity of the code blocks. Compared with packet-based retransmission, data slice-based retransmission is more conducive to reducing a transmission delay of the retransmission and reducing buffer space. In addition, the data retransmission method provided in embodiments of this application is implemented at the physical layer, where the physical layer is closer to a physical port of data transmission, and is more conducive to reducing the transmission delay compared with a method for implementing retransmission at a data link layer.

In some possible implementations, each of AM windows in the data includes N data slices, a data slice located at a starting location of each of the AM windows includes an AM, and N is an integer greater than or equal to 1.

In some possible implementations, the method further includes: The first apparatus allocates corresponding serial numbers to the data slices, starting from the data slice that includes the AM in the data, in the AM window. In the AM window, the serial numbers corresponding to the data slices starting from the data slice that includes the AM are in ascending order.

In some possible implementations, each of the data slices has a same length.

In some possible implementations, a quantity of code blocks in the data retransmission request is an integer multiple of a quantity of the code blocks in the data slice.

In some possible implementations, the retransmission data includes a target data slice corresponding to the target serial number in the buffer and a data slice following the target data slice.

In some possible implementations, after the first apparatus receives the data retransmission request, and before the first apparatus sends the retransmission data to the second apparatus based on the target serial number, the method further includes: The first apparatus sends the data retransmission acknowledgment to the second apparatus at a moment at which a next data slice is to be sent, where the retransmission acknowledgment indicates that the retransmission data starts to be sent. In other words, the data slices and the data retransmission acknowledgment are continuously sent, which helps ensure that a periodicity of the AM is stable.

In some possible implementations, a quantity of code blocks in the data retransmission acknowledgment is an integer multiple of the quantity of the code blocks in the data slice.

In some possible implementations, after the first apparatus receives the data retransmission request, the method further includes: The first apparatus determines whether a quantity of code blocks checked to be correct in the data retransmission request is greater than a threshold. If the quantity of code blocks checked to be correct in the data retransmission request is greater than the threshold, the first apparatus confirms that the data retransmission request received by the first apparatus is correct. It can be learned that, for the data retransmission request, even if some uncorrectable errors are found at this moment, the data retransmission request needs to be identified, thereby increasing a possibility of identifying the data retransmission request.

In some possible implementations, after the first apparatus receives the data retransmission request, the method further includes: The first apparatus determines a next to-be-sent data slice after reception of the data retransmission request. Then, the first apparatus updates the target serial number corresponding to the target data slice in the buffer to a serial number corresponding to the next to-be-sent data slice, and updates, based on the serial number corresponding to the next to-be-sent data slice, a serial number corresponding to each data slice following the target data slice in the buffer. In other words, after the retransmission data is read from the buffer, serial numbers corresponding to all subsequent data slices in the retransmission data need to be updated based on serial numbers of data slices that should be actually sent currently. In this way, in a data retransmission process, it can be ensured that a quantity of data slices that should be sent as recorded in one AM window is unchanged, so that a next AM is immediately sent after a current AM window ends.

In some possible implementations, the method further includes: In a process in which the first apparatus sends the retransmission data, if an AM needs to be sent at a current moment, the first apparatus sends an invalid data slice that includes the AM and invalid code blocks, so that all subsequent retransmission data slices are complete, and atomicity of the retransmission data slice is ensured.

In some possible implementations, the method further includes: If the retransmission data corresponding to the data retransmission request includes a data slice that contains an AM, the first apparatus replaces the AM in the data slice with invalid code blocks, and sends the data slice to the second apparatus. In other words, the second apparatus has received and identified the AM, and data to be sent by the first apparatus currently has not arrived at a location of a next AM. To avoid that the AM windows are disordered, the first apparatus needs to replace the AM in the to-be-retransmission data slice with the invalid code blocks before the sending.

In some possible implementations, a size of the code block is 66 bits or 257 bits.

In some possible implementations, the data slice includes 80 code blocks whose size is 66 bits or 20 code blocks whose size is 257 bits, that is, the data slice includes code blocks that can be contained by one FEC codeword.

According to a third aspect, an embodiment of this application provides a chip, where the chip includes a processor and a memory, the memory and the processor are connected to each other through a line, the memory stores instructions, and the processor is configured to perform the method described in any one of the implementations of the first aspect and the second aspect.

According to a fourth aspect, an embodiment of this application provides a communication apparatus, where the communication apparatus includes: a receiving unit, a processing unit, and a sending unit. The receiving unit is configured to receive data, where the data includes data slices, the data slice includes code blocks contained by at least one FEC codeword, and each of the data slices corresponds to one serial number. The processing unit is configured to check the data. The sending unit is configured to send a data retransmission request to a peer communication apparatus if an uncorrectable error occurs in the data, where the data retransmission request includes a target serial number, and the data retransmission request is used to request the peer communication apparatus to send retransmission data to the communication apparatus based on the target serial number.

In some possible implementations, each of AM windows in the data includes N data slices, a data slice located at a starting location of each of the AM windows includes an AM, and N is an integer greater than or equal to 1.

In some possible implementations, the processing unit is specifically configured to: identify the AM in the data, and allocate corresponding serial numbers to the data slices, starting from the data slice that includes the AM, in the AM window, where in the AM window, the serial numbers corresponding to the data slices starting from the data slice that includes the AM are in ascending order.

In some possible implementations, each of the data slices has a same length.

In some possible implementations, a quantity of code blocks in the data retransmission request is an integer multiple of a quantity of the code blocks in the data slice.

In some possible implementations, the retransmission data includes a target data slice corresponding to the target serial number and a data slice following the target data slice.

In some possible implementations, if the uncorrectable error occurs in the data, the processing unit is further configured to discard the target data slice corresponding to the target serial number and the data slice following the target data slice.

In some possible implementations, after the sending unit sends the data retransmission request to the peer communication apparatus, the receiving unit is further configured to: receive a data retransmission acknowledgment, where the data retransmission acknowledgment indicates that the retransmission data starts to be sent; and receive the retransmission data.

In some possible implementations, a quantity of code blocks in the data retransmission acknowledgment is an integer multiple of the quantity of the code blocks in the data slice.

In some possible implementations, after the receiving unit receives the data retransmission acknowledgment, the processing unit is further configured to determine whether a quantity of code blocks checked to be correct in the data retransmission acknowledgment is greater than a threshold; and if the quantity of code blocks checked to be correct in the data retransmission acknowledgment is greater than the threshold, confirm that the data retransmission acknowledgment received by the first apparatus is correct.

In some possible implementations, if the uncorrectable error occurs in the data, the sending unit is specifically configured to send the data retransmission request to the peer communication apparatus at a moment at which a next data slice is to be sent.

In some possible implementations, a size of the code block is 66 bits or 257 bits.

In some possible implementations, the data slice includes 80 code blocks whose size is 66 bits, or the data slice includes 20 code blocks whose size is 257 bits.

According to a fifth aspect, an embodiment of this application provides a communication apparatus, where the communication apparatus includes: a receiving unit, a processing unit, and a sending unit. The processing unit is configured to obtain data, where the data includes data slices, the data slice includes code blocks contained by at least one FEC codeword, and each of the data slices corresponds to one serial number. The sending unit is configured to send the data to a peer communication apparatus. The processing unit is configured to store each of the data slices and the corresponding serial number into a buffer. The receiving unit is configured to receive a data retransmission request, where the data retransmission request includes a target serial number. The sending unit is configured to send retransmission data to the peer communication apparatus based on the target serial number.

In some possible implementations, each of AM windows in the data includes N data slices, a data slice located at a starting location of each of the AM windows includes an AM, and N is an integer greater than or equal to 1.

In some possible implementations, the processing unit is further configured to allocate corresponding serial numbers to the data slices, starting from the data slice that includes the AM in the data, in the AM window, where in the AM window, the serial numbers corresponding to the data slices starting from the data slice that includes the AM are in ascending order.

In some possible implementations, each of the data slices has a same length.

In some possible implementations, a quantity of code blocks in the data retransmission request is an integer multiple of a quantity of the code blocks in the data slice.

In some possible implementations, the retransmission data includes a target data slice corresponding to the target serial number in the buffer and a data slice following the target data slice.

In some possible implementations, after the receiving unit receives the data retransmission request, and before the sending unit sends the retransmission data to the peer communication apparatus based on the target serial number, the sending unit is further configured to send a data retransmission acknowledgment to the second apparatus at a moment at which a next data slice is to be sent, where the retransmission acknowledgment indicates that the retransmission data starts to be sent.

In some possible implementations, a quantity of code blocks in the data retransmission acknowledgment is an integer multiple of the quantity of the code blocks in the data slice.

In some possible implementations, after the receiving unit receives the data retransmission request, the processing unit is further configured to: determine whether a quantity of code blocks checked to be correct in the data retransmission request is greater than a threshold; and if the quantity of code blocks checked to be correct in the data retransmission request is greater than the threshold, confirm that the data retransmission request received by the first apparatus is correct.

In some possible implementations, after the receiving unit receives the data retransmission request, the processing unit is further configured to: determine a next to-be-sent data slice after reception of the data retransmission request; and update the target serial number corresponding to the target data slice in the buffer to a serial number corresponding to the next to-be-sent data slice, and update, based on the serial number corresponding to the next to-be-sent data slice, a serial number corresponding to each data slice following the target data slice in the buffer.

In some possible implementations, the sending unit is further configured to: in a process of sending the retransmission data, if an AM needs to be sent at a current moment, send an invalid data slice that includes the AM and invalid code blocks.

In some possible implementations, the sending unit is further configured to: if the retransmission data corresponding to the data retransmission request includes a data slice that contains an AM, replace the AM in the data slice with invalid code blocks, and send the data slice to the second apparatus.

In some possible implementations, a size of the code block is 66 bits or 257 bits.

In some possible implementations, the data slice includes 80 code blocks whose size is 66 bits, or the data slice includes 20 code blocks whose size is 257 bits.

According to a sixth aspect, an embodiment of this application provides a communication system, where the communication system includes the communication apparatus described in any one of the implementations of the fourth aspect and the communication apparatus described in any one of the implementations of the fifth aspect.

According to a seventh aspect, an embodiment of this application provides a computer-readable storage medium, where the computer-readable storage medium stores a computer program, and when the computer program is executed by a computer, the method described in any one of the implementations of the first aspect and the second aspect is implemented.

According to the foregoing technical solutions, it can be learned that embodiments of this application have the following advantages.

In embodiments of this application, data is divided into a plurality of data slices at the physical layer, and the data slice includes the code blocks contained by the at least one FEC codeword. For example, if the FEC codeword can contain 80 66-bit code blocks, one data slice can include 80, 160, or more 66-bit code blocks. In addition, a corresponding serial number is allocated to each of the data slices in the data. A sending device stores, when sending the data, the sent data slices and corresponding serial numbers in a buffer. After receiving the data, a receiving device also allocates a corresponding serial number to each of the data slices in a manner the same as that of the sending device. Then, the receiving device sends, after finding an uncorrectable error, a retransmission request that carries a serial number corresponding to a data slice, and the sending device extracts the corresponding data slice from the buffer based on the retransmission request to start retransmission. It may be learned that, in embodiments of this application, the retransmission is performed at the physical layer based on the data slices. The data slice includes the code blocks contained by the at least one FEC codeword, and the data slice contains a small quantity of the code blocks. Compared with packet-based retransmission, the data slice-based retransmission is more conducive to reducing a transmission delay of the retransmission and reducing buffer space. In addition, the data retransmission method provided in embodiments of this application is implemented at the physical layer, where the physical layer is closer to a physical port of data transmission, and is more conducive to reducing the transmission delay compared with a method for implementing retransmission at a data link layer.

### BRIEF DESCRIPTION OF DRAWINGS

FIG. 1 is a diagram of a network based on an Ethernet connection;
FIG. 2 is a diagram of a structure of a communication device;
FIG. 3 is a schematic flowchart of an Ethernet data transmission method;
FIG. 4 is a schematic flowchart of a data retransmission method according to an embodiment of this application;
FIG. 5 is a diagram of allocating serial numbers to data slices according to an embodiment of this application;
FIG. 6 is a diagram of a format of a retransmission request and a retransmission acknowledgment according to an embodiment of this application;
FIG. 7 is a diagram of a first application scenario of data retransmission according to an embodiment of this application;
FIG. 8 is a diagram of a second application scenario of data retransmission according to an embodiment of this application;
FIG. 9 is a diagram of a third application scenario of data retransmission according to an embodiment of this application;
FIG. 10 is a diagram of a structure of a communication apparatus according to an embodiment of this application;
FIG. 11 is another diagram of a structure of a communication apparatus according to an embodiment of this application; and
FIG. 12 is a diagram of a structure of a communication system according to an embodiment of this application.

### DESCRIPTION OF EMBODIMENTS

Embodiments of this application provide a data retransmission method, an apparatus, and a system. In embodiments of this application, retransmission is performed at a physical layer based on data slices. The data slice includes code blocks contained by at least one FEC frame, and the data slice contains a small quantity of the code blocks, to reduce a transmission delay of a retransmission request and reduce buffer space.

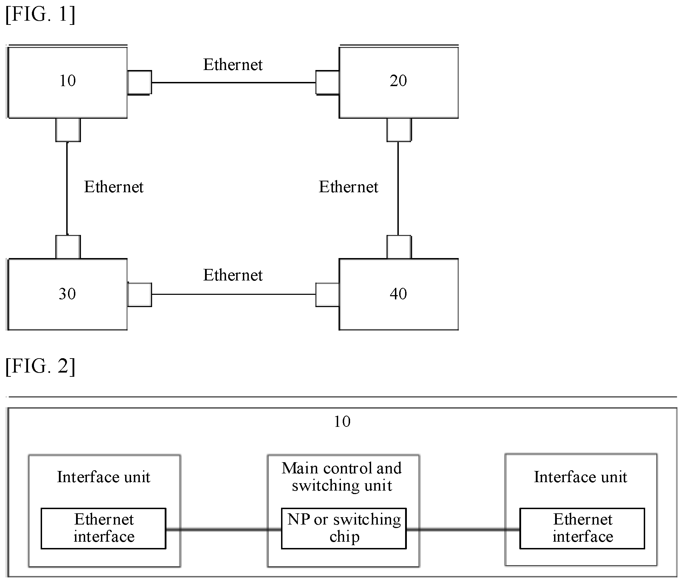

FIG. 1 is a diagram of a network based on an Ethernet connection. In FIG. 1, a communication device 10 performs data transmission with a communication device 20 and a communication device 30 based on an Ethernet, and a communication device 40 performs data transmission with the communication device 20 and the communication device 30 based on an Ethernet. Two communication devices that perform data transmission based on an Ethernet may be connected through a cable or an optical fiber. It should be understood that the communication devices in FIG. 1 may be network devices, and the network device may be a router, a switch, or the like.

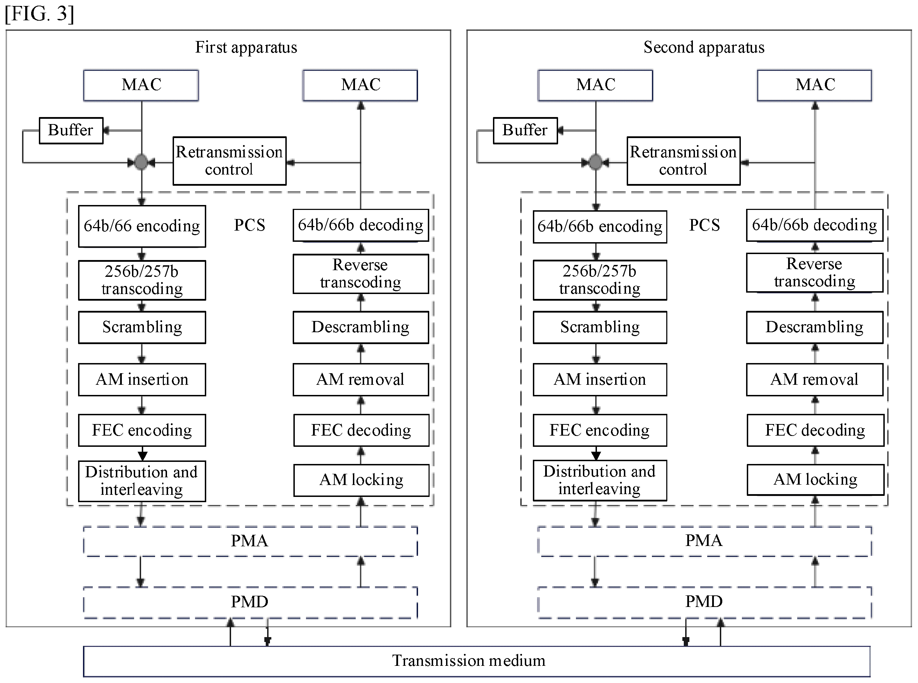

FIG. 2 is a diagram of a structure of a communication device. In FIG. 2, using the communication device 10 as an example, the communication device 10 performs data transmission based on an Ethernet. The communication device 10 includes a main control and switching unit, an interface unit, and the like. The main control and switching unit includes a network processor (network processor, NP) or a switching chip. The interface unit is configured to exchange information between the communication device 10 and another device. The interface unit includes an Ethernet interface. For a procedure of data transmission through the Ethernet interface, refer to FIG. 3. The Ethernet interface may be configured to perform all or a part of functions of a medium access control (medium access control, MAC) layer and a physical (physical, PHY) layer. A method of data transmission through the Ethernet interface may be implemented through a chip or a field programmable gate array (Field Programmable Gate Array, FPGA).

FIG. 3 is a schematic flowchart of an Ethernet data transmission method. FIG. 3 mainly describes a related processing process of a physical layer. In the following, that the first apparatus sends data to the second apparatus is used as an example for description. A procedure in which the second apparatus sends data to the first apparatus is similar. For the first apparatus, after an Ethernet packet enters the medium access control (medium access control, MAC) layer, the packet is checked and encoded based on a medium independent interface (medium independent interface, MII) requirement, and the packet is sent to a physical coding sublayer (physical coding sublayer, PCS) through various MII interfaces such as a gigabit MII (gigabit media independent interface, GMII) interface. The PCS sublayer receives GMII information sent through the GMII interface, and performs bit code block encoding and rate matching. The GMII is generally applied between the MAC layer and the physical layer of an Ethernet device. In some embodiments, the GMII interface is located within an integrated circuit. The PCS sublayer performs encoding according to a 64b/66b rule, to form a serial stream. A code block obtained through the encoding according to 64b/66b includes 66 bits, and may be referred to as a 66b code block. Then, the PCS sublayer further encodes the 66b code block into a 257b code block stream according to a 256b/257b encoding rule. After scrambling processing is performed on the 257b code block, alignment markers (alignment markers, AMs) is inserted, where the AM includes several 257b code blocks. After the AMs are inserted, forward error correction (forward error correction, FEC) encoding is performed on the 257b code block stream, and a check bit is added. Then, through distribution and interleaving, distribution to a plurality of physical coding sublayer lanes (physical coding sublayer lanes, PCSLs) is performed based on symbols (one symbol is 10 bits), and the inserted AMs are distributed on all the PCSLs. Symbols on the PCSLs may be sent to the second apparatus through a physical medium attachment (physical medium attachment, PMA) sublayer and a physical medium dependent (physical medium dependent, PMD) sublayer.

The second apparatus receives, through the PMD and the PMA, the symbols sent by the first apparatus, performs channel locking through the AM on each PCSL, reorders the PCS lanes to obtain a symbol stream, then performs FEC decoding on the symbol stream to form a serial code block stream, and removes the AM in the serial code block stream. Then, descrambling and reverse transcoding are performed on the serial code block stream from which the AM has been removed, to obtain a 66b serial code block stream. Decoding and rate matching are performed on the 66b serial code block stream, which is then sent to the MAC layer, and data is transmitted to a data link layer through the MAC layer.

It should be noted that, for ease of understanding, FIG. 3 merely briefly describes a procedure of processing through the Ethernet interface. Specifically, during application, another processing process may be added, or a part of the foregoing processing process may be removed. The foregoing method is applicable to 200G and 400G Ethernet interfaces. For 40G and 100G Ethernet interfaces, FEC encoding, FEC decoding, and 257b transcoding processes may not be included.

It should be understood that a bit is a bit in a binary digit, a measurement unit of an information amount, and a minimum unit of the information amount. The 257b code block stream, the 66b code block stream, and a symbol stream distributed to a logical channel may all be understood as bit streams. The AM may include several code blocks. For example, for the 200G Ethernet interface, the AM is four 257b code blocks, and the four 257b code blocks include eight 120 bits, a 65-bit padding field, and a 3-bit status field (4*257=120*8+65+3). For another example, for the 400G Ethernet interface, the AM is eight 257b code blocks, and the eight 257b code blocks include 16 120 bits, a 133-bit padding field, and a 3-bit status field (8*257=120*16+133+3). For still another example, for the 100G Ethernet interface, the AM is five 257b code blocks, and the five 257b code blocks include 20 64 bits and a 5-bit padding field (5*257=20*64+5).

It should be further understood that FEC encoding and decoding are configured to correct a bit error in a transmission process through an encoding and decoding technology. For example, the FEC encoding may be Reed-Solomon (Reed-Solomon, RS) encoding. An objective of performing RS encoding is to further improve a correctness rate of a bit stream in the transmission process. During RS decoding, an error bit may be corrected based on an inserted check bit. For the RS encoding, it may be considered that some check bits are inserted at intervals of specific bits without changing an original code block stream. For the RS decoding, it may be considered that in a case in which an original code block stream is not changed, an error bit in the transmission process is calculated and recovered based on the check bits inserted at intervals of specific bits during the RS encoding. After a check is completed, the check bits are removed. For an FEC encoding and decoding manner, in some possible scenarios, an RS (544,514) solution is used for the 200G and 400G Ethernet interfaces, and the RS (544,514) solution or an RS (528,514) solution may be used for the 100G Ethernet interface.

It should be noted that, in an example, in FIG. 3, in this embodiment of this application, a retransmission control module is added to the GMII interface to implement a data retransmission function of the Ethernet protocol. Specifically, when sending the 66b code block, a transmitting side of the first apparatus backs up the sent 66b code block to a buffer (buffer) at the same time. The buffer may be arranged on a chip that integrates the MAC layer and the PHY layer. If a receiving side of the second apparatus finds that an uncorrectable error exists in received data, a transmitting side of the second apparatus sends a retransmission request to the first apparatus, and a retransmission control module of the first apparatus reads corresponding data from the buffer based on the retransmission request and performs retransmission. In another example, in embodiments of this application, the retransmission control module may be added at any location before the FEC encoding is performed at the PCS layer, to implement the data retransmission function of the Ethernet protocol. For example, when sending a 257b code block, the first apparatus may back up the sent 257b code block into the buffer at the same time, and after receiving a retransmission request, reads corresponding data from the buffer and performs retransmission. The following describes in detail the data retransmission method provided in embodiments of this application.

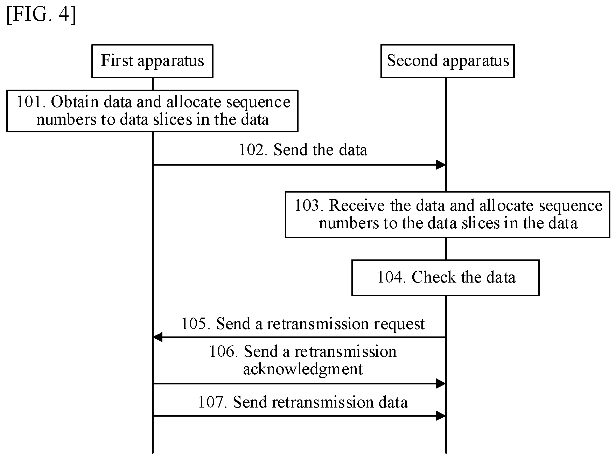

FIG. 4 is a schematic flowchart of a data retransmission method according to an embodiment of this application. Both a first apparatus and a second apparatus in FIG. 4 include a transmitting end and a receiving end. The first apparatus and the second apparatus may be network devices or optical modules on the network devices. In the following, that the first apparatus sends data to the second apparatus is used as an example for description.

101. The first apparatus obtains the data and allocates serial numbers to data slices in the data.

In a possible scenario, in this embodiment of this application, the data slices are obtained through division based on a 66b code block stream, that is, one data slice includes several 66b code blocks. The data slices may also be referred to as slices. In this embodiment of this application, one data slice is used as a basic unit for data retransmission. It should be understood that, considering that the second apparatus performs a check by using an FEC codeword (FEC codeword) as a unit and a payload (payload) of the FEC codeword, also referred to as an FEC frame, includes several 66b code blocks, once the FEC codeword is found to have an error during the check, it is unlikely to locate the error to which of the 66b code blocks included by the FEC codeword, and the basic unit for the retransmission by the first apparatus should include 66b code blocks that can be contained by at least one FEC frame. As shown in FIG. 3, in this embodiment of this application, a retransmission control module is added to the GMII interface to implement a data retransmission function of the Ethernet protocol. Therefore, in this embodiment of this application, the data slice is defined as several 66b code blocks instead of an FEC codeword. However, a quantity of 66b code blocks that can be contained by one FEC codeword needs to be first determined, and then the data slice may be defined as including the 66b code blocks contained by the at least one FEC codeword.

Take an example in which RS (544,514) is used for FEC encoding. A payload of one FEC codeword includes 5,140 bits, the 5,140 bits include 20 257b code blocks, and each of the 257b code blocks is obtained by transcoding four 66b code blocks, that is, one FEC codeword includes 80 66b code blocks. Therefore, one data slice may include 66b code blocks whose quantity is 80, 160, 240, or the like.

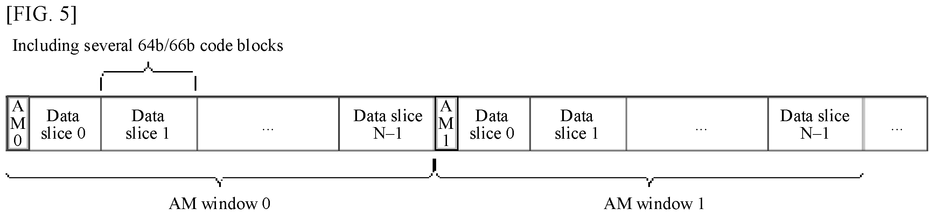

FIG. 5 is a diagram of allocating serial numbers to data slices according to an embodiment of this application. In FIG. 5, an AM may be periodically inserted into a 66b code block stream, and a periodicity for inserting the AM may also be referred to as an AM window. For example, one AM window is from a starting location of an AM 0 to a starting location of an AM 1. In a possible scenario, each of AM windows includes N data slices, each of the data slices has a same length, and N is an integer greater than or equal to 1. In each of the AM windows, a data slice at a starting location includes an AM, and serial numbers are sequentially allocated to the data slices, starting from the data slice that includes the AM, in the AM window. For example, the data slice that includes the AM corresponds to a serial number 0, and serial numbers corresponding to subsequent data slices are sequentially 1, 2, ..., N-1. For another example, the serial numbers of the data slices may alternatively start from 0 and sequentially increase in another manner. This is not specifically limited herein. It should be understood that the serial numbers are allocated to the data slices in each of the AM windows in a similar manner. In another possible scenario, if the data slice is large, for example, the data slice includes 66b code blocks contained by a plurality of the FEC codewords, or a plurality of AM windows may include one data slice.

It should be noted that, before the PCS layer actually performs operations such as 64b/66b encoding, 256b/257b transcoding, AM insertion, and FEC encoding, the MAC layer has already known in advance how the PCS specifically performs these operations. For example, the MAC layer knows how to insert an AM into a code block stream and how many 66b or 257b code blocks can be contained by an FEC codeword after the FEC encoding. Based on this, the MAC layer may notify the retransmission control module of the information, so that before the PCS performs operations such as AM insertion and FEC encoding, the retransmission control module may implement data slice division and serial number allocation.

In another possible scenario, in this embodiment of this application, the retransmission control module may also be added at a location before the FEC encoding performed by the PCS layer. For example, in this embodiment of this application, the data slices may also be obtained through division based on a 257b code block stream, that is, one data slice includes several 257b code blocks. In this case, a quantity of 257b code blocks that can be contained by one FEC codeword is first determined, and then the data slice may be defined as including 257b code blocks contained by at least one FEC codeword. Alternatively, the retransmission control module may allocate the serial numbers to each of the data slices based on the AM after the AM insertion is completed. A specific manner is similar to that described in FIG. 5.

102. The first apparatus sends the data to the second apparatus.

It should be noted that, when sending the data, the first apparatus may synchronously back up the sent data into the buffer. Specifically, each time a data slice is sent, the data slice and a corresponding serial number may be stored into the buffer. It should be understood that a size of the buffer is related to a transmission delay between the first apparatus and the second apparatus. After the buffer is full, the buffer may be circularly stored, and a newly-sent data slice overwrites a data slice that has been stored into the buffer. Therefore, the buffer needs to have sufficient space to ensure that the first apparatus may read corresponding data slices from the buffer for retransmission when receiving a retransmission request. The size of the buffer may be flexibly configured based on an actual requirement, and is not specifically limited herein.

103. The second apparatus receives the data and allocates serial numbers to the data slices in the data.

In this embodiment, after receiving the data stream, the second apparatus identifies the AM in the data stream through AM locking, and allocates a serial number to each received data slice in a manner similar to that of the first apparatus. In this way, the first apparatus only needs to send the data to the second apparatus, and does not need to send the serial numbers corresponding to the data slices to the second apparatus. It should be understood that, in FIG. 3, the second apparatus needs to allocate the serial number to each of the received data slices based on the AM in the data stream after the AM locking is performed and before the AM is removed.

In a possible scenario, the first apparatus and the second apparatus may first perform capability negotiation before data transmission. In a negotiation process, one party may determine whether the other party has a retransmission capability, and a data slice division manner and a serial number allocation manner for data slices are negotiated on the basis that both parties have the retransmission capability. In another possible scenario, if both the first apparatus and the second apparatus are determined to have the retransmission capability, the data slice division manner and the serial number allocation manner for data slices may be preconfigured for the two apparatuses.

104. The second apparatus checks the data.

The second apparatus performs an FEC check on the received data. If no error occurs during the check or an error occurs but may be corrected, the data is normally received and transmitted to the MAC of the receiving end of the second apparatus. If an uncorrectable error occurs, the transmitting end of the second apparatus needs to send a retransmission request to the first apparatus. Further, the second apparatus may alternatively discard all currently and subsequently received data slices.

105. The second apparatus sends the retransmission request to the first apparatus.

If the second apparatus finds, through the check, that an uncorrectable error occurs in a target data slice, the second apparatus sends the retransmission request to the first apparatus, where the retransmission request carries a target serial number corresponding to the target data slice. The retransmission request includes a specific quantity of code blocks. Specifically, the transmitting end of the second apparatus also sends data, and the transmitting end of the second apparatus sends the retransmission request to the second apparatus at a boundary of a next to-be-sent data slice, that is, starts to send the retransmission request at a moment at which the next data slice is to be sent originally. The retransmission request does not need to be stored into the buffer of the second apparatus. It should be understood that the quantity of code blocks in the retransmission request is an integer multiple of a quantity of code blocks in the data slice, that is, the retransmission request is also sent by using the data slice as a granularity, so that after sending the retransmission request, the second apparatus may still send the data and backup data to the first apparatus by using the data slice as the granularity, thereby ensuring atomicity of the data slice. In other words, in this embodiment of this application, both the data backup and the data retransmission are performed by using the data slice as the granularity. Based on this, the retransmission request is required to be sent by using the data slice as the granularity, and therefore, a to-be-sent data slice does not need to be split to be combined with the retransmission request into one data slice for sending. This ensures that an unsplittable data slice is used for sending and backup, that is, ensuring atomicity of the data slice.

It should be noted that the first apparatus detects the received retransmission request through fuzzy match. In other words, the first apparatus determines whether a quantity of code blocks checked to be correct in the retransmission request is greater than a threshold. If the quantity of code blocks checked to be correct in the retransmission request is greater than the threshold, it is considered that the correct retransmission request is received, and even if some uncorrectable errors are found at this moment, the retransmission request needs to be identified. For example, the retransmission request includes 80 code blocks, and any 20 code blocks are predefined code blocks of the retransmission request, and in this case, it is considered that the received data is a retransmission request.

In a possible scenario, the second apparatus sends the retransmission request to the first apparatus, but the first apparatus cannot receive the retransmission request due to a reason like a link disconnection. In this case, if the first apparatus finds that a link is disconnected, the first apparatus needs to suspend scheduling of service data, wait for link disconnection recovery within specified protection duration, and then execute a subsequent procedure.

106. The first apparatus sends a retransmission acknowledgment to the second apparatus.

After receiving the retransmission request, the first apparatus suspends the scheduling of service data at a boundary of a next to-be-sent data slice, that is, starts to send the retransmission acknowledgment at a moment at which the next data slice is to be sent. The retransmission acknowledgment indicates that the retransmission data starts to be sent, and the retransmission acknowledgment does not need to be stored into the buffer. It should be understood that, similar to the retransmission request, the retransmission acknowledgment is also sent by using the data slice as the granularity, that is, a quantity of code blocks in the retransmission acknowledgment is an integer multiple of the quantity of code blocks in the data slice. After sending the retransmission acknowledgment, the first apparatus may still perform sending and backup by using the data slice as the granularity, and may not split the data slice, thereby ensuring atomicity of the data slice.

It should be noted that the second apparatus detects the received retransmission acknowledgment through fuzzy match. In other words, the second apparatus determines whether a quantity of code blocks checked to be correct in the retransmission acknowledgment is greater than a threshold. If the quantity of code blocks checked to be correct in the retransmission acknowledgment is greater than the threshold, it is considered that the correct retransmission acknowledgment is received, and even if some uncorrectable errors are found at this moment, the retransmission acknowledgment needs to be identified. For example, if the retransmission acknowledgment includes 80 code blocks, and any 20 code blocks are predefined code blocks of the retransmission acknowledgment, it is considered that the received data is a retransmission acknowledgment. In other words, the second apparatus finds an uncorrectable error through a check, but if it can be found that the uncorrectable error is from the retransmission acknowledgment, the retransmission request does not need to be initiated in this case. After detecting the retransmission acknowledgment, the second apparatus may start to normally receive the data, and specifically, start to receive the data at a boundary of a next to-be-received data slice.

It should be noted that a retransmission type identifier carried in the retransmission request is different from that carried in the retransmission acknowledgment, so that the first apparatus identifies the retransmission request based on the retransmission type identifier in the received message, and the second apparatus identifies the retransmission acknowledgment based on the retransmission type identifier in the received message. The following provides a possible defined format of the retransmission request and the retransmission acknowledgment.

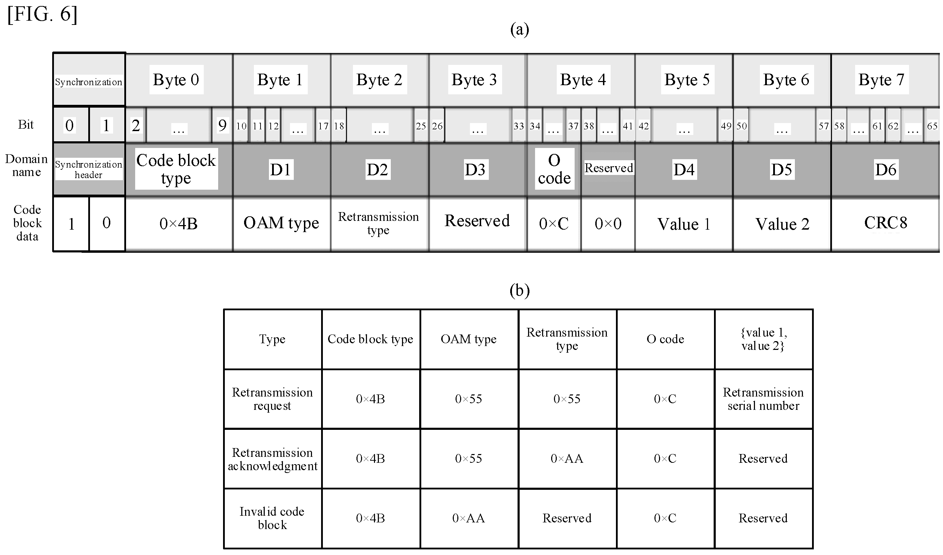

FIG. 6 is a diagram of a format of a retransmission request and a retransmission acknowledgment according to an embodiment of this application. In (a) in FIG. 6, formats of the retransmission request and the retransmission acknowledgment are defined herein with reference to a format of a 66b code block. The retransmission request or the retransmission acknowledgment may include several 66-bit formats shown in (a) in FIG. 6, to ensure that a quantity of the 66b code blocks included in the retransmission request or the retransmission acknowledgment is an integer multiple of a quantity of 66b code blocks included in a data slice. It can be learned from (a) in FIG. 6 that, a synchronization header 10 indicates that the code block is a control-type code block rather than a data code block, that is, a code block type defined by byte 0 is 0×4B. It should be understood that byte 2 is defined as a retransmission type. In (b) in FIG. 6, a retransmission type of the retransmission request may be 0×55, and a retransmission type of the retransmission acknowledgment may be 0×AA. It should be further understood that, a value 1 (value 1) defined by byte 5 and a value (value 2) defined by byte 6 are used, for the retransmission request, to carry a serial number of a target data slice, and are not used for the retransmission acknowledgment. In addition, an invalid code block is further defined herein. The invalid code block is used to replace data or an AM in a data slice in some scenarios. It can be learned from (b) in FIG. 6 that an operation, administration and maintenance (operation, administration and maintenance, OAM) type of the retransmission request and the retransmission acknowledgment is 0×55, and an OAM type of the invalid code block is 0×AA.

107. The first apparatus sends the retransmission data to the second apparatus.

After receiving the retransmission request, the first apparatus reads corresponding data from the buffer based on the target serial number, and retransmits the data. The retransmission data includes the target data slice corresponding to the target serial number and a data slice following the target data slice. After sending of all data slices that need to be retransmitted in the buffer is completed, the first apparatus may start to schedule normal service data again. If the second apparatus subsequently detects an uncorrectable error, the second apparatus may repeatedly perform the foregoing retransmission procedure.

It should be noted that, in a data retransmission process, it still needs to be ensured that a quantity of data slices that should be sent as recorded in one AM window is unchanged, so that a next AM is immediately sent after a current AM window ends. Therefore, after the retransmission data is read from the buffer, the serial numbers corresponding to all the data slices in the retransmission data need to be updated based on serial numbers of data slices that should be actually sent currently. For example, the first apparatus first determines a next to-be-sent data slice after reception of the retransmission request, then updates the target serial number corresponding to the target data slice in the buffer to a serial number corresponding to the next to-be-sent data slice, and updates, based on the serial number corresponding to the next to-be-sent data slice, a serial number corresponding to each data slice following the target data slice in the buffer. The following provides descriptions for specific application scenarios.

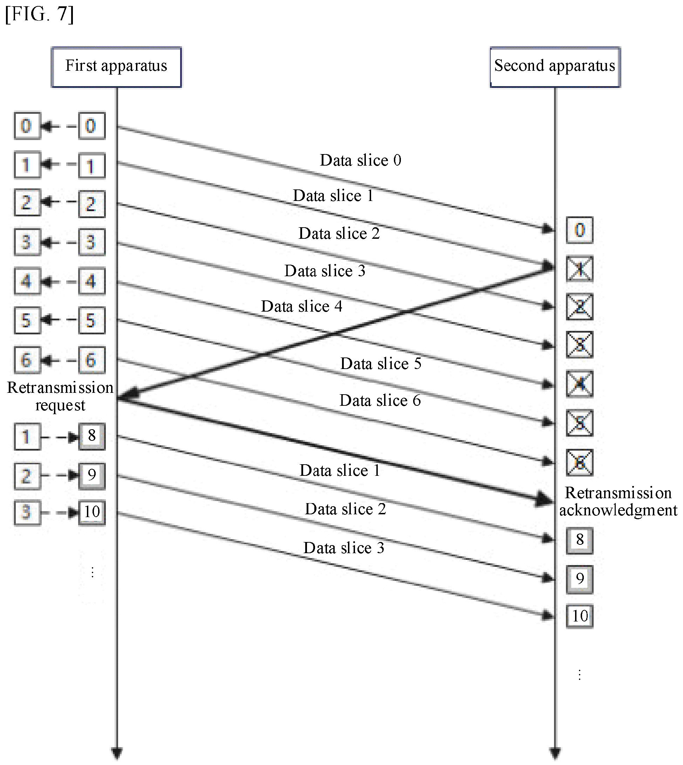

FIG. 7 is a diagram of a first application scenario of data retransmission according to an embodiment of this application. In FIG. 7, a first apparatus sequentially sends a data slice 0, a data slice 1, ... to a second apparatus. If the second apparatus finds, through a check, that an uncorrectable error occurs in the data slice 1, the second apparatus sends a retransmission request to the first apparatus, and discards the data slice 1 and other data slices received subsequently. When the first apparatus receives the retransmission request, a next to-be-sent data slice is a data slice 7. It is assumed that a length of a retransmission acknowledgment is the same as that of the data slice, and the first apparatus sends the retransmission acknowledgment to the second apparatus at a location at which the data slice 7 should be sent originally. Further, the first apparatus starts to send retransmission data at a location at which a data slice 8 should be sent originally, and the retransmission data starts from the data slice 1 in a buffer. In this way, the first apparatus updates a serial number of the data slice 1 in the buffer to a serial number of the data slice 8 and sends the updated serial number, updates a serial number of a data slice 2 in the buffer to a serial number of a data slice 9 and sends the updated serial number, and updates each of the rest likewise by analogy.

It should be noted that, in some possible scenarios, a case in which an AM needs to be sent in a retransmission process may occur, or a case in which an uncorrectable error occurs in a data slice including an AM may occur. Targeted processing manners for these possible cases are separately described in the following.

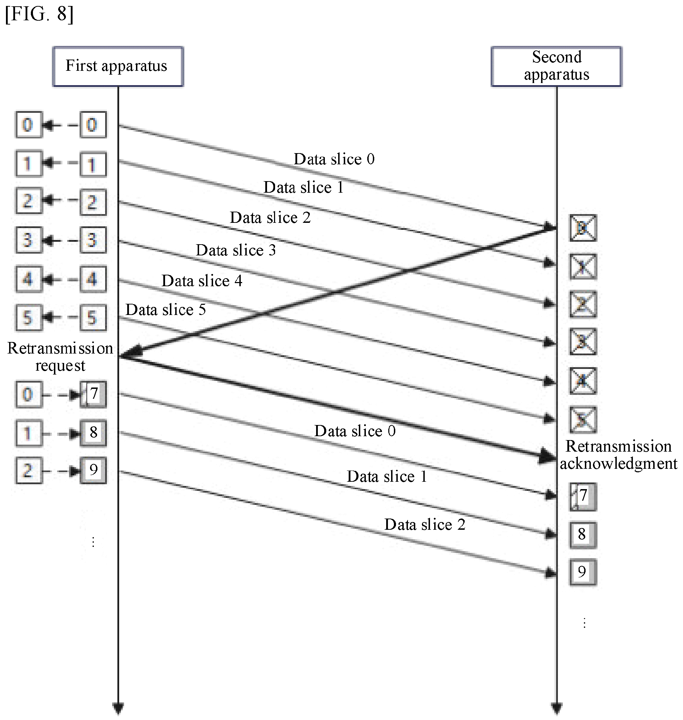

FIG. 8 is a diagram of a second application scenario of data retransmission according to an embodiment of this application. In FIG. 8, a first apparatus sequentially sends a data slice 0, a data slice 1, ..., to a second apparatus. If the second apparatus finds, through a check, that an uncorrectable error occurs in the data slice 0, the second apparatus sends a retransmission request to the first apparatus, and discards the data slice 0 and other data slices received subsequently. When the first apparatus receives the retransmission request, a next to-be-sent data slice is a data slice 6. It is assumed that a length of a retransmission acknowledgment is the same as that of the data slice, and the first apparatus sends the retransmission acknowledgment to the second apparatus at a location at which the data slice 6 should be sent originally. Further, the first apparatus starts to send retransmission data at a location at which a data slice 7 should be sent originally, and the retransmission data starts from the data slice 0 in a buffer. Because the data slice 0 is a data slice including an AM, the second apparatus has received and identified the AM, and the data to be sent by the first apparatus currently has not arrived at a location of a next AM, to avoid that AM windows are disordered, the first apparatus needs to replace the AM in the retransmission data slice 0 with invalid code blocks before sending. For example, if first 16 66b code blocks in 80 66b code blocks of the data slice 0 are an AM, the first 16 66b code blocks are replaced with invalid code blocks. It should be understood that, in actual application, the first apparatus may replace the AM in the data slice 0 with the invalid code blocks during backup and store the invalid code blocks into the buffer, so that the updated data slice 0 is directly read from the buffer during retransmission. It should be further understood that, because the AM is identified through fuzzy match, the AM may still be identified even if an uncorrectable error occurs in the AM. In addition, the AM is only used for delimitation and does not need to be retransmitted.

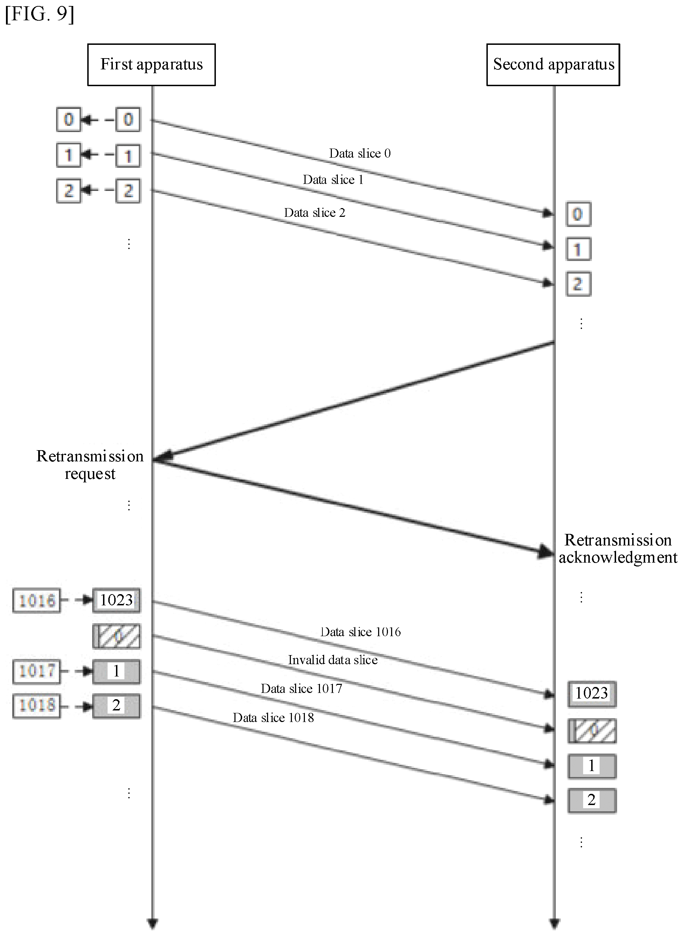

FIG. 9 is a diagram of a third application scenario of data retransmission according to an embodiment of this application. In FIG. 9, a first apparatus sequentially sends a data slice 0, a data slice 1, ..., to a second apparatus. If the second apparatus finds, through a check, that an uncorrectable error occurs in a target data slice, the second apparatus sends a retransmission request to the first apparatus, and discards the target data slice and other data slices received subsequently. After receiving the retransmission request, the first apparatus sends a retransmission acknowledgment and starts to send retransmission data. It is assumed that one AM window includes 1,024 data slices. If a location at which an AM needs to be sent is reached in a retransmission process, the first apparatus needs to generate an invalid data slice including the AM and invalid code blocks, and send the invalid data slice to the second apparatus. A size of the invalid data slice is the same as that of a normal data slice, so that all subsequent retransmission data slices are complete, thereby ensuring atomicity of the retransmission data slice. Using FIG. 9 as an example, a data slice 1016 in a buffer needs to have its serial number updated to 1023 and to be sent, and then an AM of a next AM window needs to be sent when a current AM window ends. The first apparatus generates an invalid data slice and sends the invalid data slice to the second apparatus, where the invalid data slice does not need to be stored into the buffer. In addition, because one invalid data slice is inserted into the retransmission data, serial numbers of the subsequent retransmission data slices need to be increased by 1 based on original serial numbers. For example, a data slice 1017 in the buffer has its serial number updated to 0 originally, and needs to have its serial number updated to 1 when actually sent. Other subsequent retransmission data slices have their serial numbers updated likewise by analogy.

It may be learned from the foregoing descriptions that, in embodiments of this application, data is divided into a plurality of data slices at the physical layer, and the data slice includes the code blocks contained by the at least one FEC codeword. For example, if the FEC codeword can contain 80 66-bit code blocks, one data slice can include 80, 160, or more 66-bit code blocks. In addition, a corresponding serial number is allocated to each of the data slices in the data. A sending device stores, when sending the data, the sent data slices and corresponding serial numbers in a buffer. After receiving the data, a receiving device performs AM locking, and allocates a corresponding serial number to each of the data slices in a manner the same as that of the sending device before an AM is removed. Then, the receiving device sends, after finding an uncorrectable error, a retransmission request that carries a serial number corresponding to a data slice, and the sending device extracts the corresponding data slice from the buffer based on the retransmission request to start retransmission. It may be learned that, in embodiments of this application, the retransmission is performed at the physical layer based on the data slices. The data slice includes the code blocks contained by the at least one FEC codeword, and the data slice contains a small quantity of the code blocks. Compared with packet-based retransmission, the data slice-based retransmission is more conducive to reducing a transmission delay of the retransmission and reducing buffer space. In addition, the data retransmission method provided in embodiments of this application is implemented at the physical layer, where the physical layer is closer to a physical port of data transmission, and is more conducive to reducing the transmission delay compared with a method for implementing retransmission at a data link layer.

The following describes possible structures of the first apparatus and the second apparatus. For ease of description, the following uses communication apparatuses as an example for description. The structures of the first apparatus and the second apparatus are similar, and both may use structures of the communication apparatuses described below.

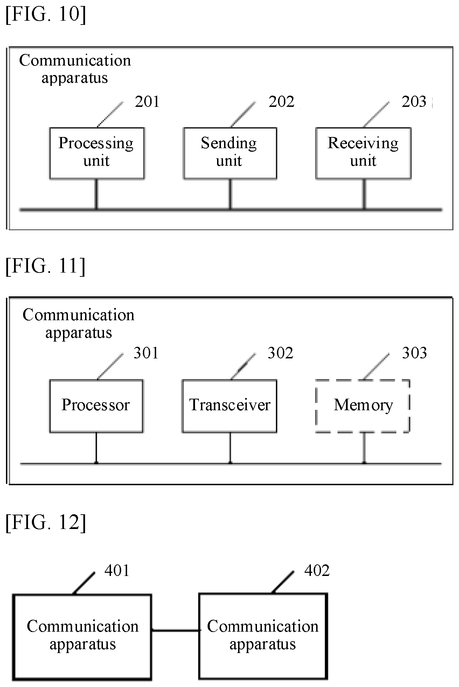

FIG. 10 is a diagram of a structure of a communication apparatus according to an embodiment of this application. In FIG. 10, the communication apparatus includes: a processing unit 201, a sending unit 202, and a receiving unit 203. Take an example in which the communication apparatus is the first apparatus. The processing unit 201 is configured to perform step 101, the sending unit 202 is configured to perform step 102, step 106, and step 107, and the receiving unit 203 is configured to perform step 105. Take an example in which the communication apparatus is the second apparatus. The processing unit 201 is configured to perform step 103 and step 104, the sending unit 202 is configured to perform step 105, and the receiving unit 203 is configured to perform step 102, step 106, and step 107. It should be understood that the communication apparatus provided in this embodiment of this application may alternatively be implemented in another manner. For example, division into units in the foregoing apparatus is merely logical function division and may be actually implemented in another division manner. For example, a plurality of units or components may be combined or integrated into another system. In addition, functional units in embodiments of this application may be integrated into one processing unit, or may be independent physical units, or two or more functional units may be integrated into one processing unit. The integrated unit may be implemented in a form of hardware, or may be implemented in a form of a software functional unit.

FIG. 11 is another diagram of a structure of a communication apparatus according to an embodiment of this application. In FIG. 11, the communication apparatus includes a processor 301 and a transceiver 302. The processor 301 and the transceiver 302 are interconnected through a line. Specifically, the transceiver 302 is configured to perform an operation of signal receiving and sending, and the processor 301 is configured to perform an operation other than signal receiving and sending. In a possible implementation, the processor 301 may include the processing unit 201 shown in FIG. 9, and the transceiver 302 includes the sending unit 202 and the receiving unit 203 shown in FIG. 10. Optionally, the communication apparatus may further include a memory 303, where the memory 303 is configured to store program instructions and data. The transceiver 302 may be an optical module.

An embodiment of this application further provides a chip. The chip integrates a circuit and one or more interfaces that are configured to implement a function of the processor 301. When a memory is integrated into the chip, the chip may complete the method steps in any one or more of the foregoing embodiments. When no memory is integrated into the chip, the chip may be connected to an external memory through an interface. The chip implements, based on program code stored in the external memory, actions performed by the transmitter device or the receiver device in the foregoing embodiments.

FIG. 12 is a diagram of a structure of a communication system according to an embodiment of this application. In FIG. 12, the communication system includes a communication apparatus 401 and a communication apparatus 402, and the communication apparatus 401 performs data communication with the communication apparatus 402. In an example, the communication apparatus 401 is the first apparatus in the embodiment shown in FIG. 4, and the communication apparatus 402 is the second apparatus in the embodiment shown in FIG. 4. The communication apparatus 401 may use the communication apparatus structure described in FIG. 10 or FIG. 11, and the communication apparatus 402 may also use the communication apparatus structure described in FIG. 10 or FIG. 11.

Finally, it should be noted that: The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data retransmission method, comprising:
receiving, by a first apparatus, data, wherein the data comprises data slices, the data slice comprises code blocks contained by at least one forward error correction FEC codeword, and each of the data slices corresponds to one serial number;
checking, by the first apparatus, the data; and
sending, by the first apparatus, a data retransmission request to a second apparatus if an uncorrectable error occurs in the data, wherein the data retransmission request comprises a target serial number, and the data retransmission request is used to request the second apparatus to send retransmission data to the first apparatus based on the target serial number.

2. The method according to claim 1, wherein each of alignment marker AM windows in the data comprises N data slices, a data slice located at a starting location of each of the AM windows comprises an AM, and N is an integer greater than or equal to 1.

3. The method according to claim 2, wherein the method further comprises:
identifying, by the first apparatus, the AM in the data, and allocating corresponding serial numbers to the data slices, starting from the data slice that comprises the AM, in the AM window, wherein in the AM window, the serial numbers corresponding to the data slices starting from the data slice that comprises the AM are in ascending order.

4. The method according to any one of claims 1 to 3, wherein each of the data slices has a same length.

5. The method according to any one of claims 1 to 4, wherein a quantity of code blocks in the data retransmission request is an integer multiple of a quantity of the code blocks in the data slice.

6. The method according to any one of claims 1 to 5, wherein the retransmission data comprises a target data slice corresponding to the target serial number and a data slice following the target data slice.

7. The method according to any one of claims 1 to 6, wherein if the uncorrectable error occurs in the data, the method further comprises:
discarding, by the first apparatus, the target data slice corresponding to the target serial number and the data slice following the target data slice.

8. The method according to any one of claims 1 to 7, wherein after sending, by the first apparatus, the data retransmission request to the second apparatus, the method further comprises:
receiving, by the first apparatus, a data retransmission acknowledgment, wherein the data retransmission acknowledgment indicates that the retransmission data starts to be sent; and
receiving, by the first apparatus, the retransmission data.

9. The method according to claim 8, wherein a quantity of code blocks in the data retransmission acknowledgment is an integer multiple of the quantity of the code blocks in the data slice.

10. The method according to claim 8 or 9, wherein after receiving, by the first apparatus, the data retransmission acknowledgment, the method further comprises:
determining, by the first apparatus, whether a quantity of code blocks checked to be correct in the data retransmission acknowledgment is greater than a threshold; and
if the quantity of code blocks checked to be correct in the data retransmission acknowledgment is greater than the threshold, confirming, by the first apparatus, that the data retransmission acknowledgment received by the first apparatus is correct.

11. The method according to any one of claims 1 to 10, wherein sending, by the first apparatus, the data retransmission request to the second apparatus if the uncorrectable error occurs in the data comprises:
if an uncorrectable error occurs in the data, sending, by the first apparatus, the data retransmission request to the second apparatus at a moment at which a next data slice is to be sent.

12. The method according to any one of claims 1 to 11, wherein a size of the code block is 66 bits or 257 bits.

13. The method according to claim 12, wherein the data slice comprises 80 code blocks whose size is 66 bits, or the data slice comprises 20 code blocks whose size is 257 bits.

14. A data retransmission method, comprising:
obtaining, by a first apparatus, data, wherein the data comprises data slices, the data slice comprises code blocks contained by at least one forward error correction FEC codeword, and each of the data slices corresponds to one serial number;
sending, by the first apparatus, the data to a second apparatus, and storing each of the data slices and the corresponding serial number into a buffer;
receiving, by the first apparatus, a data retransmission request, wherein the data retransmission request comprises a target serial number; and
sending, by the first apparatus, retransmission data to the second apparatus based on the target serial number.

15. The method according to claim 14, wherein each of alignment marker AM windows in the data comprises N data slices, a data slice located at a starting location of each of the AM windows comprises an AM, and N is an integer greater than or equal to 1.

16. The method according to claim 15, wherein the method further comprises:
allocating, by the first apparatus, corresponding serial numbers to the data slices, starting from the data slice that comprises the AM in the data, in the AM window, wherein in the AM window, the serial numbers corresponding to the data slices starting from the data slice that comprises the AM are in ascending order.

17. The method according to any one of claims 14 to 16, wherein each of the data slices has a same length.

18. The method according to any one of claims 14 to 17, wherein a quantity of code blocks in the data retransmission request is an integer multiple of a quantity of the code blocks in the data slice.

19. The method according to any one of claims 14 to 18, wherein the retransmission data comprises a target data slice corresponding to the target serial number in the buffer and a data slice following the target data slice.

20. The method according to any one of claims 14 to 19, wherein after receiving, by the first apparatus, the data retransmission request, and before sending, by the first apparatus, the retransmission data to the second apparatus based on the target serial number, the method further comprises:
sending, by the first apparatus, a data retransmission acknowledgment to the second apparatus at a moment at which a next data slice is to be sent, wherein the retransmission acknowledgment indicates that the retransmission data starts to be sent.

21. The method according to claim 20, wherein a quantity of code blocks in the data retransmission acknowledgment is an integer multiple of the quantity of the code blocks in the data slice.

22. The method according to any one of claims 14 to 21, wherein after receiving, by the first apparatus, the data retransmission request, the method further comprises:
determining, by the first apparatus, whether a quantity of code blocks checked to be correct in the data retransmission request is greater than a threshold; and
if the quantity of code blocks checked to be correct in the data retransmission request is greater than the threshold, confirming, by the first apparatus, that the data retransmission request received by the first apparatus is correct.

23. The method according to any one of claims 14 to 22, wherein after receiving, by the first apparatus, the data retransmission request, the method further comprises:
determining, by the first apparatus, a next to-be-sent data slice after reception of the data retransmission request; and
updating, by the first apparatus, the target serial number corresponding to the target data slice in the buffer to a serial number corresponding to the next to-be-sent data slice, and updating, based on the serial number corresponding to the next to-be-sent data slice, a serial number corresponding to each data slice following the target data slice in the buffer.

24. The method according to any one of claims 14 to 23, wherein the method further comprises:
in a process in which the first apparatus sends the retransmission data, if an AM needs to be sent at a current moment, sending, by the first apparatus, an invalid data slice that comprises the AM and invalid code blocks.

25. The method according to any one of claims 14 to 24, wherein the method further comprises:
if the retransmission data corresponding to the data retransmission request comprises a data slice that contains an AM, replacing, by the first apparatus, the AM in the data slice with invalid code blocks, and sending the data slice to the second apparatus.

26. The method according to any one of claims 14 to 25, wherein a size of the code block is 66 bits or 257 bits.

27. The method according to claim 26, wherein the data slice comprises 80 code blocks whose size is 66 bits, or the data slice comprises 20 code blocks whose size is 257 bits.

28. A chip, wherein the chip comprises a processor and a memory, the memory and the processor are connected to each other through a line, the memory stores instructions, and the processor is configured to perform the method according to any one of claims 1 to 27.

29. A communication apparatus, comprising: a receiving unit, a processing unit, and a sending unit, wherein the receiving unit is configured to receive data, wherein the data comprises data slices, the data slice comprises code blocks contained by at least one forward error correction FEC codeword, and each of the data slices corresponds to one serial number;
the processing unit is configured to check the data; and
the sending unit is configured to send a data retransmission request to a peer communication apparatus if an uncorrectable error occurs in the data, wherein the data retransmission request comprises a target serial number, and the data retransmission request is used to request the peer communication apparatus to send retransmission data to the communication apparatus based on the target serial number.

30. The communication apparatus according to claim 29, wherein each of alignment marker AM windows in the data comprises N data slices, a data slice located at a starting location of each of the AM windows comprises an AM, and N is an integer greater than or equal to 1.

31. The communication apparatus according to claim 30, wherein the processing unit is specifically configured to:
identify the AM in the data, and allocate corresponding serial numbers to the data slices, starting from the data slice that comprises the AM, in the AM window, wherein in the AM window, the serial numbers corresponding to the data slices starting from the data slice that comprises the AM are in ascending order.

32. The communication apparatus according to any one of claims 29 to 31, wherein each of the data slices has a same length.

33. The communication apparatus according to any one of claims 29 to 32, wherein a quantity of code blocks in the data retransmission request is an integer multiple of a quantity of the code blocks in the data slice.

34. The communication apparatus according to any one of claims 29 to 33, wherein the retransmission data comprises a target data slice corresponding to the target serial number and a data slice following the target data slice.

35. The communication apparatus according to any one of claims 29 to 34, wherein if the uncorrectable error occurs in the data, the processing unit is further configured to:
discard the target data slice corresponding to the target serial number and the data slice following the target data slice.

36. The communication apparatus according to any one of claims 29 to 35, wherein after the sending unit sends the data retransmission request to the peer communication apparatus, the receiving unit is further configured to:
receive a data retransmission acknowledgment, wherein the data retransmission acknowledgment indicates that the retransmission data starts to be sent; and
receive the retransmission data.

37. The communication apparatus according to claim 36, wherein a quantity of code blocks in the data retransmission acknowledgment is an integer multiple of the quantity of the code blocks in the data slice.

38. The communication apparatus according to claim 36 or 37, wherein after the receiving unit receives the data retransmission acknowledgment, the processing unit is further configured to:
determine whether a quantity of code blocks checked to be correct in the data retransmission acknowledgment is greater than a threshold; and
if the quantity of code blocks checked to be correct in the data retransmission acknowledgment is greater than the threshold, confirm that the data retransmission acknowledgment received by the first apparatus is correct.

39. The communication apparatus according to any one of claims 29 to 38, wherein if the uncorrectable error occurs in the data, the sending unit is specifically configured to:
send the data retransmission request to the peer communication apparatus at a moment at which a next data slice is to be sent.

40. The communication apparatus according to any one of claims 29 to 39, wherein a size of the code block is 66 bits or 257 bits.

41. The communication apparatus according to claim 40, wherein the data slice comprises 80 code blocks whose size is 66 bits, or the data slice comprises 20 code blocks whose size is 257 bits.

42. A communication apparatus, comprising: a receiving unit, a processing unit, and a sending unit, wherein
the processing unit is configured to obtain data, wherein the data comprises data slices, the data slice comprises code
blocks contained by at least one forward error correction FEC codeword, and each of the data slices corresponds to one serial number;
the sending unit is configured to send the data to a peer communication apparatus;
the processing unit is configured to store each of the data slices and the corresponding serial number into a buffer;
the receiving unit is configured to receive a data retransmission request, wherein the data retransmission request
comprises a target serial number; and
the sending unit is configured to send retransmission data to the peer communication apparatus based on the target serial number.

43. The communication apparatus according to claim 42, wherein each of alignment marker AM windows in the data comprises N data slices, a data slice located at a starting location of each of the AM windows comprises an AM, and N is an integer greater than or equal to 1.

44. The communication apparatus according to claim 43, wherein the processing unit is further configured to:
allocate corresponding serial numbers to the data slices, starting from the data slice that comprises the AM in the data, in the AM window, wherein in the AM window, the serial numbers corresponding to the data slices starting from the data slice that comprises the AM are in ascending order.

45. The communication apparatus according to any one of claims 42 to 44, wherein each of the data slices has a same length.

46. The communication apparatus according to any one of claims 42 to 45, wherein a quantity of code blocks in the data retransmission request is an integer multiple of a quantity of the code blocks in the data slice.

47. The communication apparatus according to any one of claims 42 to 46, wherein the retransmission data comprises a target data slice corresponding to the target serial number in the buffer and a data slice following the target data slice.

48. The communication apparatus according to any one of claims 42 to 47, wherein after the receiving unit receives the data retransmission request, and before the sending unit sends the retransmission data to the peer communication apparatus based on the target serial number, the sending unit is further configured to:
send a data retransmission acknowledgment to the second apparatus at a moment at which a next data slice is to be sent, wherein the retransmission acknowledgment indicates that the retransmission data starts to be sent.

49. The communication apparatus according to claim 48, wherein a quantity of code blocks in the data retransmission acknowledgment is an integer multiple of the quantity of the code blocks in the data slice.

50. The communication apparatus according to any one of claims 42 to 49, wherein after the receiving unit receives the data retransmission request, the processing unit is further configured to:
determine whether a quantity of code blocks checked to be correct in the data retransmission request is greater than a threshold; and
if the quantity of code blocks checked to be correct in the data retransmission request is greater than the threshold, confirm that the data retransmission request received by the first apparatus is correct.

51. The communication apparatus according to any one of claims 42 to 50, wherein after the receiving unit receives the data retransmission request, the processing unit is further configured to:
determine a next to-be-sent data slice after reception of the data retransmission request; and
update the target serial number corresponding to the target data slice in the buffer to a serial number corresponding to the next to-be-sent data slice, and update, based on the serial number corresponding to the next to-be-sent data slice, a serial number corresponding to each data slice following the target data slice in the buffer.

52. The communication apparatus according to any one of claims 42 to 51, wherein the sending unit is further configured to:
in a process of sending the retransmission data, if an AM needs to be sent at a current moment, send an invalid data slice that comprises the AM and invalid code blocks.

53. The communication apparatus according to any one of claims 42 to 52, wherein the sending unit is further configured to:
if the retransmission data corresponding to the data retransmission request comprises a data slice that contains an AM, replace the AM in the data slice with invalid code blocks, and send the data slice to the second apparatus.

54. The communication apparatus according to any one of claims 42 to 53, wherein a size of the code block is 66 bits or 257 bits.

55. The communication apparatus according to claim 54, wherein the data slice comprises 80 code blocks whose size is 66 bits, or the data slice comprises 20 code blocks whose size is 257 bits.

56. A communication system, comprising: the communication apparatus according to any one of claims 29 to 41 and the communication apparatus according to any one of claims 42 to 55.

57. A computer-readable storage medium, wherein the computer-readable storage medium stores a computer program, and when the computer program is executed by a computer, the method according to any one of claims 1 to 27 is implemented.
